# EUROPEAN PATENT SPECIFICATION

(11) **EP 1 427 776 B1**
(45) Date of publication and mention of the grant of the patent: **22.03.2006**
(21) Application number: 02759978.6
(22) Date of filing: 06.09.2002
(51) Int. Cl.: C08K 5/098, C08K 5/14, C08L 15/00

(54) **ELASTOMERIC COMPOSITIONS**
ELASTISCHE MISCHUNGEN
COMPOSITIONS ELASTOMERES

(30) Priority: 07.09.2001 CA 2357089
(43) Date of publication of application: 16.06.2004
(73) Proprietor: Lanxess Inc., Sarnia, Ontario N7T 7M2 (CA)
(72) Inventor: VON HELLENS, Carl, Walter, Bright's Grove, Ontario N0N 1C0 (CA); GUO, Sharon, X., Stratford, Ontario N5A 6X9 (CA); DATO, John, Cuyahoga Falls, OH 44223 (US)
(74) Representative: Zobel, Manfred
(86) International application number: PCT/CA2002/001363
(87) International publication number: WO 2003/022916

(56) References cited:
- EP-A- 0 420 449
- WO-A-01/85834
- WO-A-02/057350

## Description

The present invention relates to a rubber composition having improved properties. These improved properties render the rubber composition useful, for example, for track pads for tracked vehicles such as tanks paving machines, heavy earth-moving equipment and farm tractors.

European Patent Application No. 0 326 394, published August 2; 1989, is entitled "Improved rubber compound for tracked vehicle track pads". The application describes the demands that are imposed on elastomeric compositions that are used as track pads for military vehicles, especially heavy tonnage tracked vehicles of 40 to 60 tons, and also describes compositions that are said to meet these demands better than elastomeric compositions previously used for this purpose, namely, styrene-butadiene rubber.

The European application discloses for use as tank pads a "unique combination of a polymer system, a filler system, a curing system and an antidegradant system". The polymer system may be "a highly saturated nitrile rubber", "a blend of from about 80 to about 90 parts of highly saturated nitrile and from about 10 to about 20 parts of carboxylated nitrile", or "a blend of from about 45 parts to about 90 parts of highly saturated nitrile, from about 1 to about 5 parts of carboxylated nitrile and from about 5 to about 50 parts of nitrile rubber". At page 4 lines 56 and 57 it is stated that the polymer "used in this subject invention application rubber formation is a highly hydrogenated nitrile copolymer with slight double bonds". Hence, it is clear that by a "highly saturated nitrile" is meant a hydrogenated nitrile rubber. It is said "preferably (to) have a degree of unsaturation ranging between about 1% and about 20%".

We have now found novel elastomeric compositions that display some properties that are even superior to the compositions of EPA 0 326 394.

In one aspect the present invention provides a composition comprising a hydrogenated carboxylated nitrile rubber (HXNBR), a hydrogenated nitrile rubber (HNBR), a filler, a multivalent salt of an organic acid and a vulcanizing agent.

In another aspect the invention provides a process for preparing an elastomeric composition which comprises blending HXNBR, HNBR, a filler, a multivalent salt of an organic acid and a vulcanizing agent.

The elastomeric composition comprises a hydrogenated carboxylated nitrile rubber (HXNBR). This is present in an amount in the range of from 15 to 30 phr. The HNBR preferably constitutes the remainder, i.e., be present in the range of from 85 to 70 phr. Alternatively, there may also be present an amount, of a carboxylated nitrile rubber (XNBR). In other embodiments there may be present nitrile rubber (NBR) and XNBR in addition to the HXNBR and HNBR. It is trivial that the amount of HXNBR and/or HNBR will have to be decreased accordingly to result in a total of 100%. The total composition will be dependent on the intended use of the compound and can be easily determined by few preliminary experiments.

A hydrogenated carboxylated nitrile rubber, HXNBR, and a process for preparing it, are the subject of Canadian Patent Application Serial No. 2,304,501, filed April 10. Such rubbers are preferably formed by copolymerizing a conjugated diene, a nitrile and an unsaturated acid, to form a copolymer with a random, or statistical, distribution of the diene, nitrile and acid, followed by hydrogenation. When the diene is polymerized the product contains some carbon-carbon double bonds. In the past attempts to hydrogenate those double bonds have led also to reduction of nitrile and carbonyl groups, which is undesirable. The invention of Application Serial No. 2,304,501 enables hydrogenation of carbon-carbon double bonds without concomitant reduction of nitrile and carboxyl groups. It is preferred that the hydrogenated carboxylated nitrile rubber used in the present invention is in accordance with Patent Application Serial No. 2,304,501. Hydrogenated carboxylated nitrile rubbers in accordance with Application Serial No. 2,304,501 are commercially available from Bayer under the trademark Therban XT.

For use in the present invention it is preferred that the HXNBR has a nitrile content in the range of from 18 to 45 wt%, an acid monomer content in the range of from 0.3 to 9 wt%, an RDB (content of residual double bonds after hydrogenation which might be determined by ¹H-NMR or IR spectroscopy as disclosed in the prior art) of not greater than 9.0% and a Mooney viscosity in the range of from 35 to 120 (ML 1+4' @ 100°C according to ASTM test D1646). In one preferred HXNBR the nitrile is acrylonitrile, the diene is 1,3-butadiene and the acid is acrylic acid.

Nitrile rubbers (NBR's) are preferably copolymers of a conjugated diene and a nitrile. Many conjugated dienes are used in nitrile rubbers and these may all be used in the present invention. Mention is made of 1,3-butadiene, isoprene, 2,3-dimethyl-1,3-butadiene, 1,3-pentadiene and piperylene, of which 1,3-butadiene is preferred.

The nitrile is normally acrylonitrile or methacrylonitrile or α-chloroacrylonitrile, of which acrylonitrile is preferred.

The conjugated diene usually constitutes preferably in the range of from 50 to 85% of the copolymer and the nitrile preferably constitutes in the range of from 15 to 50% of the copolymer, these percentages being by weight. The polymer may also contain an amount, usually not exceeding 10wt.%, of one or more other copolymerisable monomers, for example, an ester of an unsaturated acid, say ethyl, propyl or butyl acrylate or methacrylate, or a vinyl compound, for example, styrene, α-methylstyrene or a corresponding compound bearing an alkyl substituent on the phenyl ring, for instance, a p-alkylstyrene such as p-methylstyrene. Suitable nitrile rubbers are commercially available under the trademark Perbunan and Krynac.

Hydrogenated nitrile rubbers (HNBR's) are formed by hydrogenating nitrile rubbers. When a conjugated diene and a nitrile copolymerize the product of the copolymerization still contains carbon-carbon double bonds. These can be hydrogenated in known manner. Hydrogenation is not always complete, however, and the degree of remaining unsaturation is expressed in terms of residual double bonds, or "RDB", being the number of carbon-carbon double bonds that remain in the copolymer after hydrogenation, expressed as a percentage of the carbon-carbon double bonds present in the copolymer prior to hydrogenation. Hydrogenated nitrile rubbers are available from Bayer under the trademark Therban, with acrylonitrile contents of 34%, 39% and 43% and with RDB's of 18, 5.5, 3.5 and less than 0.9.

Another ingredient used in the method of this invention is a multivalent salt of an organic acid. Suitable multivalent cations are derived from metals, of which zinc, magnesium, calcium and aluminum are mentioned. As organic acids there are mentioned saturated and unsaturated acids preferably having up to 8 carbon atoms, more preferably up to 6 carbon atoms. The preferred organic acids are acrylic and methacrylic acids and the preferred salts are zinc diacrylate and, to a lesser extent, zinc dimethacrylate. It is possible to form the salt in situ, but this is not normally preferred. The amount of the salt used is in the range of from 21 to 35 parts by weight per hundred parts of rubber (phr),

The vulcanizing agent can be any of the known vulcanizing agents, including sulphur vulcanizing agents, but is preferably a peroxide vulcanizing agent. Suitable organic peroxide crosslinking agents include dicumyl peroxide, available under the trademark Dicup 40KE, di-t-butyl peroxide, benzoyl peroxide 2,5-dimethyl-2,5-di(t-butylperoxy)-hexyne-3, 2,5-dimethyl-2,5-di(benzoylperoxy)hexane and a,a-bis(tertiary butylperoxy)diisopropylbenzene, available under the trademark Vulcup 40KE. The preferred curing agent is dicumyl peroxide. The peroxide curing agent is preferably used in an amount of in the range of from 0.2 to 20 phr, more preferably 1 to 10 phr.

Another ingredient is a filler. This may be, for example, carbon black, silica, calcium carbonate, talc, TiO2 or other materials known for use as active or inactive fillers in elastomeric compositions. Mention is made of small particle carbon black such as any of those designated as N-110, N-121, N-220 or N-330 by ASTM D-1765 or, alternatively, a medium processed channel black can be used. The amount of filler is preferably in the range of from 1 to 100 phr, more preferably 15 to 25 phr. Mixtures of fillers can be used, and mixtures of carbon black and silica are mentioned.

The composition of the invention may also contain other usual components such as, for example, antioxidants, plasticizers, processing oils, processing aids, waxes, antiozonants, antidegradants, ultra violet absorbers, co-agents and the like. Particular mention is made of polymerized 1,2-dihydro-2,2,4-trimethylquinoline (TMQ), commercially available under the trade mark Vulkanox HS/LG, which is preferably used in amount of 0.25 to 2 phr. As a plasticizer there is mentioned trioctyl trimellitate (TOTM), which can preferably be used in an amount from 1 to 5 phr.

The rubbery or elastomeric composition of the present invention can be prepared and compounded using any of the conventional compounding and mixing techniques using conventional rubber processing equipment such as a Banbury mixer or mixing mill. The unvulcanized rubbery composition is then pre-formed through a rubber extruder and larger amounts or thicknesses are pre-heated before assembling it with any applicable metal insert subassembly component or plate member together with a suitable heat-activatable adhesive which are then placed into a mold for the particular configuration article such as a tank track pad, bushing, shoe and/or solid tire or other product. A vulcanization temperature of at least 160 degrees Celsius should be used to fully activate the peroxide curing system when making the highly improved tank track pads. Premature partial vulcanization must be avoided from the normal or inherent heat generated during the use of the mixing equipment. Therefore, mixing apparatus of a type provided with cooling means is preferably utilized.

As indicated above, the composition of the invention are particularly suited for use in the form of pads for tracks of tracked vehicles. These include, for example, military vehicles such as tanks, and also heavy earth-moving equipment,paving machines and farm tractors. The high abrasion resistance of the compositions of the invention also renders them suitable for use in conveyor belts for heavy duty service at elevated temperature. To illustrate, hot material may be dropped vertically onto a short horizontal conveyor belt which transfers the material in a horizontal direction and onto a longer horizontal conveyor. The material of the short horizontal conveyor is subjected to stringent conditions, as it suffers the impact of hot material and also suffers abrasion from the material as it accelerates that material from zero velocity in the horizontal direction. The compositions of the invention stand up well to these conditions, as compared to other materials used for the same purpose.

Another application of compositions of the invention is in seals used in drilling in oil wells, where the high abrasion resistance of the compositions is beneficial.

The invention is further illustrated in the following examples.

### EXAMPLES

### Examples 1 to 7

In these examples there was used an HXNBR that has a bound acrylonitrile content of 33 wt%, an acrylic acid content of 5 wt%, balance 1,3-butadiene, an RDB of 3.5% and a Mooney viscosity of 77 (ML 1+4' @ 100°C). The HNBR was Therban® C3446, available from Bayer, a hydrogenated nitrile rubber with 34% acrylonitrile and an RDB of 4. Sartomer® 633 and 634 are zinc diacrylate and zinc dimethacrylate, respectively. Dicup® 40C is dicumyl peroxide, commercially available in a clay binder coating and containing 40% of active component. TOTM is trioctyl trimellitate plasticizer.

Mixing was carried out in a small Banbury mixer (BR82). Mixing commenced at a temperature of 30°C and the cooler was supplied with cooling water. Mixer speed was 55 RPM.

The following sequence was used:

| | |
|---|---|
| 0 Seconds | add rubbers and Vulkanox® HS |
| 30 seconds | add carbon black |
| 90 seconds | add TOTM and zinc diacrylate or zinc dimethacrylate. |

When the temperature reached 135°C, usually after approximately 6 minutes, the mixture was dumped from the Banbury mixer. To the mixture were added the curing agent (and ZnO in Example 1). The mixture was milled on a 10inch x 20 inch (25,4cm x 50.8cm) mill, with rolls cooled to a temperature of 30°C for approximately 4 minutes. Thereafter the rolls of the mill were closed to a very tight mix and the mixture passed through the mix six times.

Results are given in Table 1. Example 1 is comparative and in accordance with the teaching of EPA 0 326 394, there being no HXNBR present in the elastomer.

**Table 1**

| **Example Number** | **1** | **2** | **3** | **4** | **5** | **6** | **7** |
|---|---|---|---|---|---|---|---|
| | | | | | | | |
| Therban ®C3467 | 100 | 75 | 75 | 75 | 75 | 75 | 75 |
| HXNBR | | 25 | 25 | 25 | 25 | 25 | 25 |
| CarbonBlackN-121 | 20 | 20 | 20 | 20 | 20 | 20 | 20 |
| SR 634 (ZDMA) | 30 | 30 | 25 | 20 | | | |
| SR633(ZDA) | | | | | 30 | 25 | 20 |
| Vulkanox® HS/LG (IMQ) | 0.5 | 0.5 | 0.5 | 0.5 | 0.5 | 0.5 | 0.5 |
| TOTM | 2 | 2 | 2 | 2 | 2 | 2 | 2 |
| | | | | | | | |
| DiOup®40C | 3 | 3 | 3 | 3 | 3 | 3 | 3 |
| ZnO | 2 | 0 | 0 | 0 | 0 | 0 | 0 |
| | | | | | | | |
| **MDR CURE CHARACTERISTICS** | | | | | | | |
| 170°C, 1°arc, 100 range | | | | | | | |
| | | | | | | | |
| MH (dN.m) | 38.25 | 47.44 | 37.20 | 31.48 | 62.79 | 48.31 | 40.09 |
| ML (dN.m) | 2.01 | 2.83 | 2.45 | 2.61 | 2.40 | 2.29 | 2.35 |
| Delta MH-ML (dN.m) | 36.24 | 44.61 | 34.75 | 28.87 | 60.39 | 46.02 | 37.74 |
| ts 1 (min) | 1.20 | 1.23 | 1.05 | 0.93 | 1.11 | 0.96 | 0.84 |
| t'50 (min) | 3.15 | 2.55 | 2.13 | 2.02 | 2.55 | 2.14 | 1.89 |
| t'90 (min) | 8.62 | 6.85 | 6.52 | 6.33 | 6.93 | 6.71 | 6.03 |
| | | | | | | | |
| **STRESS STRAIN (DUMBELLS)** | | | | | | | |
| Cure time @ 170°C (min) | 16 | 14 | 14 | 13 | 14 | 14 | 13 |
| Test Temperature-23°C | | | | | | | |
| Stress @ 25 (MPa) | 1.98 | 3.68 | 3.23 | 2.58 | 3.63 | 3.21 | 2.54 |
| Stress @ 50 (MPa) | 2.43 | 4.39 | 3.87 | 3.14 | 4.26 | 4.29 | 3.37 |
| Stress @ 100 (MPa) | 3.15 | 5.75 | 5.12 | 4.06 | 5.44 | 6.54 | 5.05 |
| Stress @ 200 (MPa) | 5.56 | 9.22 | 8.37 | 6.67 | 8.40 | 12.29 | 9.82 |
| Stress @ 300 (MPa) | 9.03 | 12.78 | 11.85 | 9.80 | 11.58 | 18.26 | 15.39 |
| Ultimate Tensile (MPa) | 21.79 | 18.09 | 17.96 | 16.92 | 17.25 | 24.18 | 24.53 |
| Ultimate Elongation (%) | 658 | 535 | 565 | 610 | 569 | 424 | 499 |
| Hard. Shore A2 Inst(pts.) | 71 | 84 | 80 | 75 | 82 | 79 | 73 |
| | | | | | | | |
| M300M100 | 2.87 | 2.22 | 2.31 | 2.41 | 2.13 | 2.79 | 3.05 |
| | | | | | | | |
| **DIN Abrasion** (mm³) | 90 | 121 | 113 | 107 | 112 | 101 | 80 |
| | | | | | | | |
| **Picco Abrasion** | | | | | | | |
| Abrasive Index (%) | 571.2 | 1013.0 | 765.0 | 660.5 | 908.4 | 1041.1 | 1190.0 |
| | | | | | | | |
| **Taber Abrasion** | | | | | | | |
| 5000 cycles (Weight Loss-g) | 0.3362 | 0.3835 | 0.3294 | 0.2575 | 0.3766 | 0.3168 | 0.2437 |
| | | | | | | | |
| **GABO** | | | | | | | |
| E' @ 60°C (MPa) | 224 | 519 | 456 | 330 | 546 | 401 | 270 |
| E" @ 60°C (MPa) | 34.6 | 70.9 | 63.8 | 45.6 | 67.3 | 50.4 | 34.9 |
| TanDelta | 0.154 | 0.137 | 0.140 | 0.138 | 0.123 | 0.126 | 0.129 |

| | | | | | | | |
|---|---|---|---|---|---|---|---|
| *Abrasion resistance:* DIN 53-516 (60 grit Emery paper) | | | | | | | |
| *Cure rheometry:* ASTM D 52-89 MDR2000E Rheometer at 1° arc and 1.7 Hz | | | | | | | |
| *Dynamic Property Testing:* | | | | | | | |

Dynamic testing was carried out using the GABO. The GABO is a dynamic mechanical analyzer for characterizing the properties of vulcanized elastomeric materials. RPA measurements were obtained with the use of an Alpha Technologies RPA 2000 operating at 100°C at a frequency of 6 cpm.

Compositions of Examples 2 to 7 are significantly superior to the composition of Example 1 in several respects. Thus, the products of Examples 2 to 7 are superior in terms of static modulus, as evident from the higher figures (MPa) for the stress @ 100. They are also superior in terms of dynamic modulus, as evident from the higher figures for elastic modulus E' @ 60°C in the Gabo test. The ratio of static modulus @ 300 to the static modulus @ 100 (M300/M100) is an approximate indicator of resistance to roadwear, with the higher number indicating greater resistance. It can be seen that the products of Examples 6 and 7 are best in this regard.

Abrasion can occur in different manners and there are different abrasion tests that reflect this. In the DIN abrasion test a low number indicates a better result, and Example 7 is superior in this test to the product of Example 1. In the Picco abrasion test a higher number indicates a better result, and Examples 2 to 7 are superior to Example 1. In the Taber abrasion test a low number indicates a better result, and Examples 3, 4, 6 and 7 are superior to Example 1 in this test.

It is also noteworthy that, in general, results obtained using zinc diacrylate are superior to those obtained using zinc dimethacrylate. Furthermore, tests with lower amounts of zinc diacrylate showed better results in abrasion tests than those with higher amounts of zinc acrylate.

## Claims

1. A composition comprising at least one hydrogenated carboxylated nitrile rubber, at least one hydrogenated nitrile rubber, at least one filler, at least one multivalent salt of an organic acid and at least one vulcanizing agent wherein the hydrogenated carboxylated nitrile rubber is present in an amount in the range of from 15 to 30 per hundred parts of rubber and the hydrogenated nitrile rubber is present in an amount in the range of from 85 to 70 per hundred parts of rubber and wherein the amount of the multivalent salt of an organic acid is in the range of from 21 to 35 parts by weight per hundred parts of rubber.

2. A composition according to claim 1 wherein the hydrogenated carboxylated nitrile rubber has a nitrile content in the range of from 18 to 45 wt%, an acid monomer content in the range of from 0.3 to 9 wt%, an RDB (content of residual double bonds after hydrogenation) not greater than 9.0% and a Mooney viscosity in the range of from 35 to 120 (ML 1+4'@100°C according to ASTM test D1646).

3. A composition according to claim 1 or 2 wherein the hydrogenated carboxylated nitrile rubber is based on acrylonitrile, 1,3-butadiene and acrylic acid.

4. A composition according to claim 1, 2 or 3 which also comprises at least one carboxylated nitrile rubber.

5. A composition according to any one of claims 1 to 4 which also comprises at least one nitrile rubber.

6. A composition according to any one of claims 1 to 5 wherein the multivalent salt is zinc diacrylate.

7. A composition according to any one of claims 1 to 6 wherein the vulcanizing agent is a peroxide.

8. A composition according to any one of claims 1 to 7 which comprises at least one carbon black filler.

9. A vulcanized composition acoording to any one of claims 1 to 8.

10. A vulcanized composition according to claim 9 in the form of a pad for the track of a tracked vehicle.

11. A process for preparing a composition according to any one of claims 1 to 10 which comprises blending at least one hydrogenated carboxylated nitrile rubber, at least one hydrogenated nitrile rubber, at least one filler, at least one multivalent salt of an organic acid and at least one vulcanizing agent.

## Patentansprüche

1. Zusammensetzung, enthaltend mindestens einen hydrierten carboxylierten Nitrilkautschuk, mindestens einen hydrierten Nitrilkautschuk, mindestens einen Füllstoff, mindestens ein mehrwertiges Salz einer organischen Säure und mindestens ein Vulkanisationsmittel, worin der hydrierte carboxylierte Nitrilkautschuk in einer Menge im Bereich von 15 bis 30 Teilen pro hundert Teile Kautschuk vorliegt, der hydrierte Nitrilkautschuk in einer Menge im Bereich von 85 bis 70 Teilen pro hundert Teile Kautschuk vorliegt und die Menge des mehrwertigen Salzes einer organischen Säure im Bereich von 21 bis 35 Teilen pro hundert Teile Kautschuk liegt.

2. Zusammensetzung nach Anspruch 1, worin der hydrierte carboxylierte Nitrilkautschuk einen Nitrilgehalt im Bereich von 18 bis 45 Gew.-%, einen Säuremonomergehalt im Bereich von 0,3 bis 9 Gew.-%, einen RDB-Wert (Gehalt an Restdoppelbindungen nach Hydrierung) von höchstens 9,0% und eine Mooney-Viskosität im Bereich von 35 bis 120 (ML 1+4' bei 100°C gemäß ASTM-Prüfung D1646) aufweist.

3. Zusammensetzung nach Anspruch 1 oder 2, worin der hydrierte carboxylierte Nitrilkautschuk auf Acrylnitril, 1,3-Butadien und Acrylsäure basiert.

4. Zusammensetzung nach Anspruch 1, 2 oder 3, die außerdem mindestens einen carboxylierten Nitrilkautschuk enthält.

5. Zusammensetzung nach einem der Ansprüche 1 bis 4, die außerdem mindestens einen Nitrilkautschuk enthält.

6. Zusammensetzung nach einem der Ansprüche 1 bis 5, worin es sich bei dem mehrwertigen Salz um Zinkdiacrylat handelt.

7. Zusammensetzung nach einem der Ansprüche 1 bis 6, worin es sich bei dem Vulkanisationsmittel um ein Peroxid handelt.

8. Zusammensetzung nach einem der Ansprüche 1 bis 7, die mindestens einen Rußfüllstoff enthält.

9. Vulkanisierte Zusammensetzung nach einem der Ansprüche 1 bis 8.

10. Vulkanisierte Zusammensetzung nach Anspruch 9 in Form eines Polsters für die Raupenkette eines Kettenfahrzeugs.

11. Verfahren zur Herstellung einer Zusammensetzung nach einem der Ansprüche 1 bis 10, bei dem man mindestens einen hydrierten carboxylierten Nitrilkautschuk, mindestens einen hydrierten Nitrilkautschuk, mindestens einen Füllstoff, mindestens ein mehrwertiges Salz einer organischen Säure und mindestens ein Vulkanisationsmittel vermischt.

## Revendications

1. Composition comprenant au moins un caoutchouc nitrile carboxylé hydrogéné, au moins un caoutchouc nitrile hydrogéné, au moins une charge, au moins un sel multivalent d'un acide organique et au moins un agent de vulcanisation, dans laquelle le caoutchouc nitrile carboxylé hydrogéné est présent en une quantité dans la plage de 15 à 30 pour cent parties de caoutchouc et le caoutchouc nitrile hydrogéné est présent en une quantité dans la plage de 85 à 70 pour cent parties de caoutchouc et dans laquelle la quantité du sel multivalent d'un acide organique est dans la plage de 21 à 35 parties en poids, pour cent parties de caoutchouc.

2. Composition selon la revendication 1, dans laquelle le caoutchouc nitrile carboxylé hydrogéné présente une teneur en nitrile dans la plage de 18 à 45% en poids, une teneur en monomère acide dans la plage de 0,3 à 9% en poids, une RDB (teneur en doubles liaisons résiduelles après hydrogénation) ne dépassant pas 9,0% et une viscosité de Mooney dans la plage de 35 à 120 (ML 1+4' à 100ºC conformément à l'essai ASTM D1646).

3. Composition selon la revendication 1 ou 2, dans laquelle le caoutchouc nitrile carboxylé hydrogéné est à base d'acétonitrile, de 1,3-butadiène et d'acide acrylique.

4. Composition selon la revendication 1, 2 ou 3 comprenant également au moins un caoutchouc nitrile carboxylé.

5. Composition selon l'une quelconque des revendications 1 à 4 comprenant également au moins un caoutchouc nitrile.

6. Composition selon l'une quelconque des revendications 1 à 5, dans laquelle le sel multivalent est le diacrylate de zinc.

7. Composition selon l'une quelconque des revendications 1 à 6, dans laquelle l'agent de vulcanisation est un peroxyde.

8. Composition selon l'une quelconque des revendications 1 à 7, comprenant au moins une charge au noir de carbone.

9. Composition vulcanisée selon l'une quelconque des revendications 1 à 8.

10. Composition vulcanisée selon la revendication 9 sous la forme d'un patin pour la chenille d'un véhicule sur chenille.

11. Procédé de préparation d'une composition selon l'une quelconque des revendications 1 à 10 comprenant le mélangeage d'au moins un caoutchouc nitrile carboxylé hydrogéné, d'au moins un caoutchouc nitrile hydrogéné, d'au moins une charge, d'au moins un sel multivalent d'un acide organique et d'au moins un agent de vulcanisation.
